# FASCICULE DE BREVET EUROPEEN

(11) **EP 3 629 400 B1**
(45) Date de publication et mention de la délivrance du brevet: **14.07.2021**
(21) Numéro de dépôt: 19200040.4
(22) Date de dépôt: 27.09.2019
(51) Int. Cl.: H01M 4/04, H01M 4/131, H01M 4/1391, H01M 4/485, H01M 4/66, H01M 10/052, C23C 10/24

(54) **PROCÉDÉ DE PRÉPARATION D'OXYDES DE MÉTAUX DE TRANSITION LITHIÉS**
HERSTELLUNGSVERFAHREN VON LITHIUMÜBERGANGSMETALLOXIDEN
METHOD FOR PREPARING LITHIUM TRANSITION METAL OXIDES

(30) Priorité: 28.09.2018 FR 1858942
(43) Date de publication de la demande: 01.04.2020
(73) Titulaire: Commissariat à l'Energie Atomique et aux Energies Alternatives, 75015 Paris (FR)
(72) Inventeur: GUERIN, Camille, 38054 GRENOBLE CEDEX 09 (FR); GEBEL, Gérard, 38054 GRENOBLE CEDEX 09 (FR); PICARD, Lionel, 38054 GRENOBLE CEDEX 09 (FR)
(74) Mandataire: Nony

(56) Documents cités:
- WO-A1-2013/097186
- WO-A1-2018/210791
- US-A1- 2013 337 344
- US-A1- 2014 335 357
- US-A1- 2015 093 643
- US-B1- 6 447 739
- XIA Y ET AL: "STUDIES ON AN LI-MN-O SPINEL SYSTEM (OBTAINED BY MELT-IMPREGNATION)AS A CATHODE FOR 4 V LITHIUM BATTERIES. ÖSYNTHESIS AND ELECTROCHEMICAL BEHAVIOUR OF LIXMN2O4", JOURNAL OF POWER SOURCES, ELSEVIER SA, CH, vol. 56, no. 1, 1 juillet 1995 (1995-07-01), pages 61-67, XP000541935, ISSN: 0378-7753, DOI: 10.1016/0378-7753(95)80009-6

## Description

La présente invention se rapporte à un nouveau de procédé de préparation d'oxydes de métaux de transitions lithiés, LiMO₂, plus particulièrement dédiés à constituer des électrodes de batteries au lithium.

Le développement des technologies portables et des véhicules électriques requiert désormais des densités d'énergie et de puissance croissantes. Or, les batteries au lithium actuelles ne peuvent atteindre de tels niveaux d'énergie et de puissance.

Pour mémoire, une batterie au lithium est constituée au principal d'une électrode positive, de composants électrolytiques (à savoir un film polymérique poreux et un séparateur imbibé d'un électrolyte organique le plus souvent formé d'un mélange de solvants organiques dans lequel est dissout un sel de lithium) et d'une électrode négative. Classiquement, l'électrode positive est un composite poreux constitué du matériau actif pouvant insérer et désinsérer des ions, et d'additifs conducteurs électroniques. Ces éléments sont dispersés dans une matrice polymérique poreuse et le tout est enduit sur un collecteur de courant. L'électrode négative est pour sa part, dans la technologie lithium-ion, un composite poreux ou dans le cas de la technologie lithium-métal, un film de lithium. Le tout est également enduit sur un collecteur de courant.

Les limitations en termes de densités de puissance et d'énergie des batteries au lithium, viennent, d'une part, des propriétés intrinsèques de leurs matériaux actifs constitutifs et d'autre part, de la résistance interne des systèmes et de leur teneur massique en matière inactive c'est-à-dire en matériaux qui ne participent pas fonctionnellement au processus d'oxydo-réduction. Par ailleurs, il est connu qu'au cours du cyclage, des surtensions apparaissent aux électrodes. Elles sont dues aux cinétiques de transfert de charge aux interfaces et de transport de matière au cours du fonctionnement. Des chutes ohmiques, liées à la résistance de chaque matériau, dont l'électrolyte, et aux résistances de contact sont également constatées.

Pour accroître les densités d'énergie et de puissance, il est donc nécessaire d'optimiser la réversibilité du système. La présente invention a précisément pour objet de proposer un nouveau type d'électrodes permettant de répondre à cette attente.

Conventionnellement, plusieurs étapes sont nécessaires pour élaborer une électrode. Tout d'abord, il est généralement nécessaire de préparer au préalable le matériau actif constitutif de cette électrode. Classiquement, dans le cadre d'une électrode négative, ce matériau actif est préparé à partir d'une source de lithium, généralement des sels de lithium et d'un ou plusieurs précurseurs métalliques tels que des sels et/ou oxydes par exemple. La transformation de ces matériaux de départ est réalisée le plus souvent par co-précipitation, synthèse sol-gel ou traitement thermique, comme par exemple illustré dans la publication H. Guo, et al. Energy Convers. Manag., vol. 52, no. 4, pp. 2009-2014, 2011. Après la synthèse, le matériau actif obtenu est lavé, broyé et les particules ainsi obtenues sont généralement dispersées dans un solvant avec des conducteurs électroniques et un liant polymérique pour former une formulation dites encre. C'est cette encre qui est ensuite enduite sur le collecteur de courant pour former un dépôt, après séchage et calandrage. Le dépôt de cette encre peut notamment être réalisé par sérigraphie, dépôt physique ou chimique en phase vapeur, jet d'encre ou pulvérisation en voie liquide. Toutefois, la mise en œuvre de ces techniques de dépôt dans le domaine des batteries ne s'avère pas totalement satisfaisante dans la mesure où, d'une manière globale, elles requièrent du temps et sont coûteuses. De plus, le choix des précurseurs est souvent limité et certaines des conditions de mise en œuvre, telles qu'une mise sous vide et/ou une exposition à des températures élevées, peuvent être préjudiciables à l'uniformité du film formé. Ces limitations affectent donc la transposition de ces techniques conventionnelles à l'élaboration des batteries.

En conséquence, la présente invention vise à proposer un nouveau procédé de préparation d'électrodes tout particulièrement utiles pour les batteries au lithium, mais également appropriées à un usage dans les condensateurs, les dispositifs de filtration actif, les systèmes de conversion d'électricité en gaz, les dispositifs d'électrolyse et les batteries redox-flow.

Plus précisément, la présente invention se rapporte à un procédé de préparation d'une électrode comprenant au moins les étapes consistant à
a) Disposer du matériau support constitutif de l'électrode, dit matériau (1), ledit matériau étant apte à former un collecteur de courant et constitué, au moins en surface, d'au moins un métal de transition de degré d'oxydation zéro et/ou d'un oxyde de métal de transition,
b) Mettre en contact direct, dans un réacteur, tout ou partie dudit matériau (1) avec au moins une source de lithium (2), ledit contact étant réalisé à une température au moins égale à la température de fusion de ladite source en lithium (2), et dans des conditions propices à la formation d'un dépôt d'au moins un oxyde métallique de transition lithié, à titre de matériau actif, à l'interface dudit matériau (1) et de ladite source de lithium,
caractérisé en ce que le métal de degré d'oxydation zéro et/ou l'oxyde métallique présent au contact dudit matériau (1) et de ladite source de lithium constitue la source en métal de transition dédiée à interagir thermiquement avec le lithium pour former ledit matériau actif.

Les inventeurs ont ainsi constaté qu'il est possible de former, en une unique étape, une électrode dotée d'un film d'oxyde métallique de transition lithié, à titre de matériau actif, sous réserve de considérer à titre de collecteur, un collecteur métallique apte à agir en tant que précurseur de l'espèce métallique de ce matériau actif.

Contre toute attente, un traitement thermique de ce collecteur, en présence d'une source de lithium, conduit à la formation du film attendu.

Avantageusement, le métal de degré d'oxydation zéro et/ou l'oxyde métallique composant dudit matériau (1) constitue l'unique source en métal de transition dédié à interagir thermiquement avec le lithium.

Dans la description qui suit, les expressions « métal de transition zéro », « métal de transition de degré d'oxydation zéro » et « métal de transition » ont la même signification et peuvent donc être utilisées de manière indifférente.

Avantageusement, le procédé est réalisé en sel fondu. En d'autres termes, il ne requiert pas la mise en œuvre d'un solvant liquide.

Avantageusement, le procédé ne relève pas d'un procédé d'électrodéposition. Il est notamment à ce titre différent du procédé décrit dans WO 2016/014658. Ainsi, le procédé est réalisé dans un réacteur différent d'une cellule d'électrolyse. De préférence ce réacteur est un creuset.

Selon une variante de réalisation, le matériau (1) est formé au moins en surface d'un métal de transition de degré d'oxydation zéro et ledit procédé comprend préalablement à l'étape b) une étape d'oxydation thermique dudit métal zéro.

Selon une autre variante de réalisation, le matériau (1) considéré en étape a) est un matériau collecteur revêtu d'un dépôt d'au moins un oxyde métallique lithié et obtenu au préalable selon le procédé de l'invention.

Le procédé de l'invention est avantageux à plusieurs titres.

Tout d'abord, il permet d'élaborer une électrode à partir d'un collecteur de courant en une seule étape. Il permet ainsi de s'affranchir des étapes de formulation d'une encre, d'enduction et d'évaporation du solvant nécessaires avec les procédés conventionnels.

L'interface entre le collecteur de courant et le matériau actif étant intime, elle permet de minimiser significativement les résistances de contact entre ces deux composants.

L'électrode obtenue est avantageusement couvrante et dénuée de conducteur électronique et de liant polymérique. Elle est en outre non poreuse. Les densités d'énergies sont ainsi maximisées.

En conséquence, le procédé de l'invention permet de maximiser la surface développée entre le matériau actif et le collecteur de courant le supportant, tout en offrant la possibilité avantageuse de pouvoir minimiser l'épaisseur de matériau actif, le taux de matière inactive et la porosité dans le système.

Enfin, le procédé de l'invention est en outre avantageusement compatible avec la réalisation d'électrodes à architecture très diverses.

En effet, dans la mesure où le procédé de l'invention s'affranchit d'une étape d'enduction, il n'est plus nécessaire de considérer uniquement des collecteurs planaires. L'électrode peut par exemple se présenter désormais sous la forme de fil, mousse, etc. En conséquence, il s'avère avantageusement possible, via le procédé de l'invention, de réaliser des substrats métalliques de haute surface développée et ainsi de maximiser la densité de puissance.

Selon un autre de ses aspects, la présente invention se rapporte à une électrode utile pour une batterie de lithium caractérisée en ce qu'elle est constituée d'un collecteur de courant et d'un film de matériau actif, ledit film étant en contact direct et intime avec ledit collecteur et étant constitué d'oxyde(s) métallique(s) de transition lithié(s).

Au sens de l'invention, le dépôt d'oxyde métallique de transition lithié formé selon le procédé de l'invention ou présent sur les électrodes selon l'invention, peut être formé d'un unique type d'oxyde métallique de transition lithié ou de plusieurs types d'oxyde métallique de transition lithié différents par exemple LiMnO₂ et Li₂MnO₃. Ces oxydes métalliques de transition lithiés différents peuvent notamment être organisés sous la forme de films superposés comme décrits dans les exemples ci-après. De même, un oxyde métallique de transition lithié peut comprendre différents métaux de transition ou un seul type de métal de transition.

Selon encore un autre de ses aspects, l'invention concerne l'utilisation d'une électrode selon l'invention dans une batterie au lithium, un condensateur, un dispositif de filtration actif, un système de conversion d'électricité en gaz, un dispositif d'électrolyse et une batterie redox-flow et de préférence une batterie au lithium.

Selon encore un autre de ses aspects, l'invention concerne une batterie au lithium comprenant au moins une électrode selon l'invention ou obtenue selon un procédé de l'invention.

### DESCRIPTION DETAILLEE DES FIGURES

La figure 1 représente un diffractogramme pour l'électrode obtenue en exemple 1.
La figure 2 représente un diffractogramme pour l'électrode obtenue en exemple 2.
La figure 3 représente des diffractogrammes réalisés pour des matériaux de l'exemple 2 obtenus à des durées variables du traitement thermique.
La figure 4 représente un diffractogramme pour l'électrode obtenue en exemple 3.
La figure 5 représente une photographie par microscope électronique à balayage de l'électrode obtenue en exemple 3.
La figure 6 représente l'évolution temporelle du ratio c/a entre les paramètres de maille des oxydes formés en exemple 4.
La figure 7 représente les courbes de cyclage d'un accumulateur réalisé selon l'exemple 5.
La figure 8 représente un diffractogramme pour l'électrode obtenue en exemple 6.
La figure 9 représente une photographie par microscope électronique à balayage d'une électrode obtenue en exemple 6.

### DESCRIPTION DETAILLEE DE L'INVENTION

Comme énoncé précédemment, la présente invention vise au principal un procédé utile pour préparer une électrode.

Plus précisément, ce procédé met en œuvre à titre de matériau support constitutif de l'électrode, un matériau (1) apte à former un collecteur de courant constitué, au moins en surface, d'au moins un métal de transition zéro et/ou d'un oxyde de métal de transition.

En particulier, le matériau (1) apte à former un collecteur de courant est sous une forme non particulaire. Plus particulièrement, ce matériau (1) consiste en un collecteur de courant.

Il est rappelé qu'un collecteur de courant a pour fonction de collecter ou distribuer les électrons à l'électrode. Il doit être peu couteux, de faible densité, chimiquement stable face aux matériaux d'électrode et à l'électrolyte, et électrochimiquement stable dans la fenêtre de potentiel d'utilisation.

Dans le cadre de la présente invention, ce collecteur a en outre pour fonction de constituer l'unique source en ions métalliques, nécessaire à l'élaboration du matériau actif à former selon le procédé de l'invention. En d'autres termes, il possède la même nature métallique que la matière active de l'électrode à élaborer.

Ainsi, le matériau collecteur convenant à l'invention comprend au moins en surface externe, voire est constitué d'au moins un métal de transition zéro et/ou d'un de ses oxydes.

A titre illustratif de ces composés métalliques peuvent être tout particulièrement cités les nickel, cobalt, manganèse, titane, fer, vanadium et leurs oxydes respectifs.

Selon une première variante ce matériau est constitué de métal zéro et en particulier de nickel, cobalt, manganèse, titane, fer, et/ou de vanadium.

Selon une seconde variante ce matériau est constitué d'oxyde métallique et en particulier d'oxyde de manganèse, oxyde de cobalt, oxyde de nickel, oxyde de titane, oxyde fer et/ou oxyde de vanadium.

Selon une troisième variante, ce matériau est formé à cœur d'un métal zéro et en surface d'un de ses oxydes métalliques. Un tel matériau peut notamment être généré par oxydation thermique d'un matériau collecteur constitué de métal zéro.

Selon une quatrième variante, ce matériau est formé à cœur d'un matériau non métallique et en surface d'au moins un métal de transition zéro et/ou d'un de ses oxydes.

De préférence, le composant métallique en surface dudit matériau collecteur (1) est choisi parmi le nickel, le cobalt, le fer, le manganèse et leurs oxydes respectifs.

Ce matériau collecteur peut être considéré dans son intégralité ou seulement en partie dans le procédé selon l'invention.

Le dépôt de matériau actif est en effet localisé au contact direct de ce matériau collecteur et de la source de lithium. Il est donc possible, si opportun, de sélectionner des zones de contact.

Selon une première variante, l'intégralité du matériau collecteur est mise en contact de la source en lithium et exposée au traitement thermique nécessaire à la formation du dépôt d'oxyde métallique de transition lithié.

Selon une seconde variante, le matériau collecteur n'est mis que partiellement en contact de la source en lithium, par exemple seulement sur l'une de ses faces externes.

Selon une troisième variante, le matériau collecteur est en partie masqué préalablement à sa mise en contact avec la source en lithium de manière à ne réaliser un dépôt d'oxyde métallique de transition lithié que sur ses portions non masquées. Le matériau constitutif du masque est bien entendu choisi pour sa résistance aux conditions opératoires imposées en étape b) et sa capacité à être éliminé en fin de procédé.

Enfin et comme énoncé précédemment, le fait que le procédé selon l'invention s'affranchit d'une étape d'enduction, il n'est plus nécessaire de considérer uniquement des collecteurs planaires. Le matériau collecteur peut se présenter notamment sous la forme d'un fil, d'une mousse, d'un feuillard, d'un tube, d'une plaque ou d'une surface micro- ou nano-structurée.

Ainsi, le collecteur selon l'invention peut notamment être une plaque de métal pur, ou d'un oxyde de métal, une mousse de métal pur ou d'oxyde de métal, un feuillard de métal pur ou d'oxyde de métal, un tube de métal pur ou d'oxyde de métal, une plaque de métal pur ou d'oxyde de métal, ou encore une surface micro- ou nano-structurée de métal pur ou d'oxyde de métal.

Le matériau collecteur est mis en contact avec une source de lithium.

A titre de source de lithium peuvent notamment être cités les sels de lithium tels que LiOH, Li₂CO₃, LiNO₃ LiNO₂, Li₂SO₄, LiF, LiCl, LiBr, LiI, LiHCO₃, C₂H₃LiO₂, Li₂O₂ et leurs mélanges.

La mise en contact de ce collecteur avec la source de lithium est réalisée au sein d'un réacteur.

De préférence, le réacteur contient uniquement tout ou partie du matériau collecteur (1) et ladite source de lithium (2).

Ce réacteur a une forme propice à la mise en contact du collecteur dans son intégralité ou seulement d'une portion de celui-ci avec la source de lithium.

Dans le mode de réalisation où il est recherché la formation d'un dépôt de matériau actif sur l'intégralité de la surface externe du matériau collecteur, le réacteur est apte à contenir intégralement ce collecteur et la source de lithium.

Comme précisé précédemment, ce réacteur ne convient pas pour une électrolyse.

Il est en revanche compatible avec une montée en température et un maintien en température propice à la formation du dépôt oxyde métallique de transition lithié.

D'une manière générale, ces températures et durée de chauffage sont ajustées au regard de la nature chimique et épaisseur de film d'oxyde métallique de transition lithié, souhaitées et également pour ne pas altérer l'intégrité du matériau collecteur. Il est notamment important d'éviter toute délamination du matériau du collecteur qui affecterait sa cohésion à l'interface.

La température de chauffage est au moins égale à la température de fusion de la source de lithium.

En particulier, elle est supérieure à 500°C.

Avantageusement elle est inférieure à 1000°C.

Elle peut notamment varier de 550°C à 950°C et avantageusement de 600 à 925°C. En ce qui concerne la durée, elle peut varier de 30 minutes à 72 heures, de préférence de 3 à 48 heures.

Par exemple, pour une température de 650°C, cette durée peut varier de 12 à 24 heures.

Selon une variante de réalisation, le matériau (1) considéré en l'étape b) est un matériau revêtu d'un matériau actif obtenu selon le procédé de l'invention.

Dans cette variante de réalisation, la source de lithium considérée en étape b) peut être identique ou différente de préférence différente, de celle considérée pour la formation de ce matériau (1) revêtue d'un matériau actif.

Si identique, la reproduction du procédé à l'identique permet d'accéder à un dépôt d'épaisseur différente.

Si différent, la reproduction de cette variante de procédé permet d'accéder à un matériau collecteur revêtue d'un film de matériau actif bi-composant dans son épaisseur.

Le procédé selon l'invention permet de former des films d'oxyde métallique de transition lithié non poreux. En outre, leur épaisseur peut être avantageusement inférieure à 75µm, en particulier inférieure à 30 µm et de préférence varie de 8 à 15 µm.

A titre illustratif de modes de réalisation particulier du procédé de l'invention peuvent être tout particulièrement considérés ceux décrits dans les exemples ci-après à savoir :
- Disposer d'une plaque de manganèse oxydé à titre de collecteur avec du Li₂CO₃ à titre de source de lithium et exposer le tout à 900°C pendant 5 h ; ou
- Disposer d'une plaque de manganèse métal zéro à titre de collecteur avec du Li₂CO₃ à titre de source de lithium et exposer le tout à 900°C pendant 3 h ; ou
- Disposer d'une plaque de nickel métal zéro, notamment à l'état de mousse, à titre de collecteur avec du LiOH à titre de source de lithium et exposer le tout à 650°C pendant 24 h ; et
- Disposer d'une plaque de nickel oxydé à titre de collecteur avec du LiOH à titre de source de lithium et exposer le tout à 650°C pendant 6 h à 48 h.

Lorsque le traitement thermique est terminé, on obtient une électrode positive.

Une électrode selon l'invention et notamment obtenue selon le procédé de l'invention possède avantageusement les spécificités suivantes.

Son collecteur se présente sous la forme d'un feuillard, d'un tube, d'une plaque ou d'une surface micro ou nano structurée.

Son dépôt de matériau actif peut posséder des épaisseurs variables. Avantageusement, le film de matériau actif possède une épaisseur inférieure à 75 µm, en particulier inférieure à 30 µm voire variant de 8 à 15 µm.

Ce dépôt de matériau actif est non poreux.

Sa densité est avantageusement la densité de son matériau actif pur. Elle est ainsi supérieure à 3.5 g/cm³.

Ce dépôt de matériau actif possède une teneur très réduite en matériau dit inactif voire en est avantageusement dénué.

Sa résistance de contact entre le matériau collecteur et le matériau actif est très faible.

A titre illustratif, une telle électrode peut posséder un film de matériau actif formé d'au moins un voire deux matériaux et de préférence d'un unique matériau choisi parmi LiMnO₂, Li₂MnO₃ et LiNiO₂.

Comme il ressort des exemples ci-après, une électrode telle que définie ci-dessus et notamment obtenue selon l'invention, se révèle particulièrement efficace pour une utilisation dans une batterie au lithium, un condensateur, un dispositif de filtration actif, un système de conversion d'électricité en gaz, un dispositif d'électrolyse et une batterie redox-flow et de préférence une batterie au lithium.

Son matériau actif est stable thermiquement et chimiquement. Fonctionnellement, il possède une réaction réversible avec Li⁺, avec le minimum de changements structuraux lors de l'insertion et la désinsertion des ions. L'insertion et la désinsertion est suffisamment rapide pour atteindre de fortes densités de puissance. Il possède une capacité à insérer un maximum d'ions Li⁺, un potentiel élevé par rapport au couple Li/Li⁺ et donc est propice à l'obtention d'un accumulateur avec un maximum de tension, une bonne conductivité électronique.

Les exemples figurant ci-après sont présentés à titre illustratif et non limitatif du domaine de l'invention.

### Exemple 1

### Lithiation d'une plaque de Manganèse métal préalablement oxydée

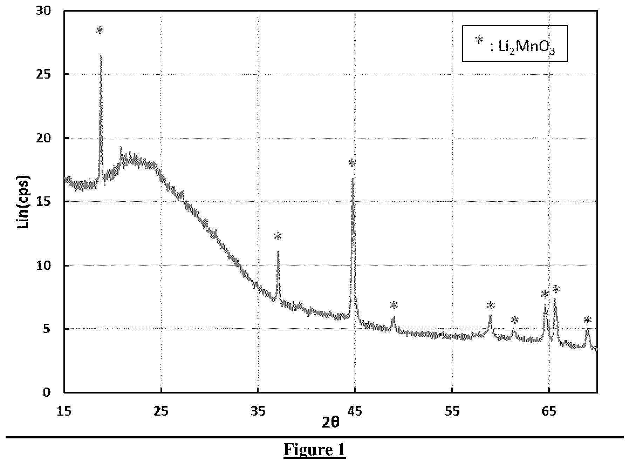

Une plaque de manganèse métal est oxydée dans un four à 900°C (20°C/min) pendant 5h. L'échantillon est ensuite placé dans un creuset avec du Li₂CO₃. Le tout subit un traitement thermique à 850°C pendant 10h. L'électrode ainsi formée est ensuite lavée à l'eau. Dans ces conditions de traitement, le film de matériau actif obtenu possède une épaisseur de 200 µm. Le diffractogramme présenté en figure 1 démontre la présence de Li₂MnO₃ à la surface du manganèse. Une coupe de la plaque obtenue démontre la présence de métal Mn⁰ au cœur du matériau.

### Exemple 2

### Lithiation d'une plaque de Manganèse métal pur

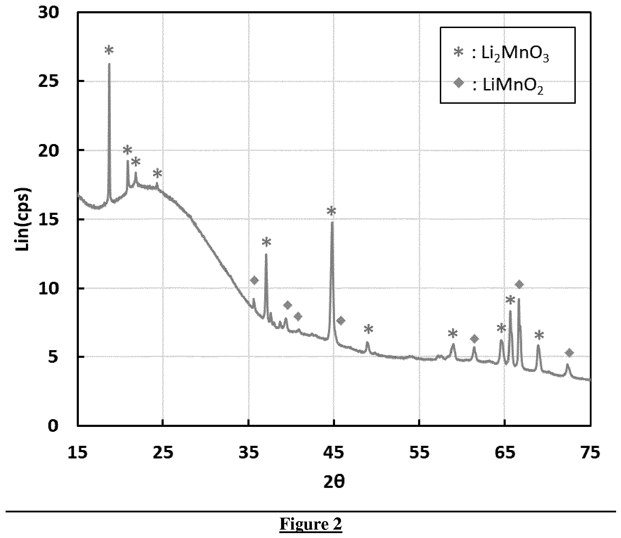

Une plaque de manganèse métal est poncée et lavée pour nettoyer toute trace d'oxyde en surface. Elle est ensuite placée dans un creuset avec du Li₂CO₃. Le tout subit un traitement thermique à 850°C pendant 3h. L'électrode formée est ensuite lavée à l'eau. Le diffractogramme présenté en figure 2 démontre la présence de Li₂MnO₃ à la surface du manganèse. Les pics caractéristiques du LiMnO₂ ainsi que ceux du Mn⁰ restent observables. Une coupe de l'électrode observée au microscope électronique à balayage montre que la surface du cœur métallique Mn⁰ est recouverte d'une couche de MnO, elle-même recouvert d'une couche de Li₂MnO₃ de 100 µm puis d'une couche de LiMnO₂ de 80 µm.

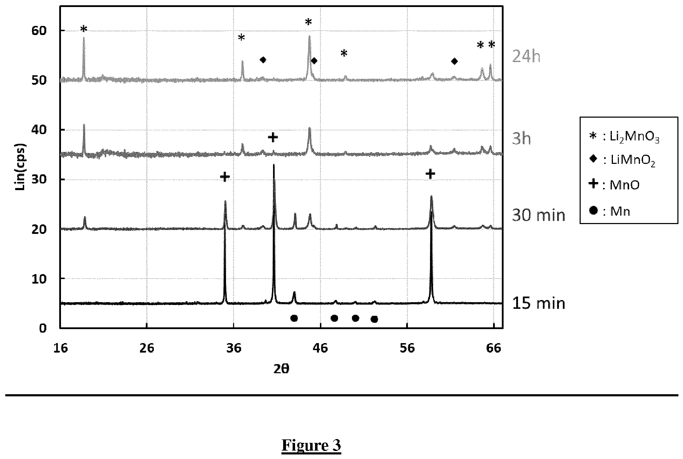

Ce même procédé a été répété à des températures différentes et/ou pour des temps d'exposition différents. La figure 3 représente les diffractogrammes obtenus après 15 min, 30 min, 3 h et 24 h de traitement à 700°C. Ils permettent de caractériser la nature chimique des films de matériau actif ainsi obtenus, les pics caractéristiques de chacune des espèces apparaissent et/ou disparaissent au cours du procédé.

Il peut ainsi être noté qu'à partir de 30 min de chauffage à 700°C du Li₂MnO₃ est formé à la surface du manganèse métal. Après 3h, il est obtenu un mélange de 2 matériaux lithiés, le Li₂MnO₃ et le LiMnO₂.

### Exemple 3 :

### Lithiation d'une plaque de Nickel métal pur

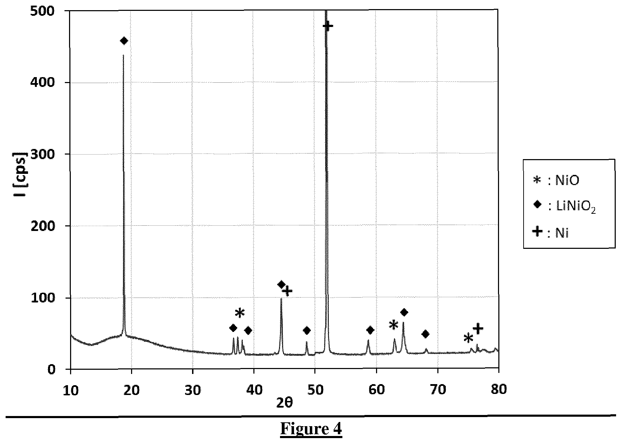

Une plaque de 0,75 g de nickel est plongée dans un creuset avec 15g de LiOH. Le tout est chauffé à 650°C pendant 24h. L'ensemble est ensuite lavé à l'eau. Le diffractogramme en figure 4 révèle la présence de LiNiO₂ à la surface du collecteur de courant et de Ni⁰ à cœur.

L'observation d'une coupe de cette électrode permet d'observer une interface continue entre le cœur métallique et la surface lithiée. L'épaisseur de matière active est de 15 µm.

Comme en exemple 2, ce même procédé a été répété à des températures différentes pendant 24h.

Les observations suivantes sont constatées :
- Entre 500°C et 550°C, une très faible lithiation de la surface peut être observée. La phase majoritaire est un oxyde de nickel.
- Ce n'est qu'à partir de 650°C que l'on obtient la phase LiNiO₂
- Entre 500°C et 650°C, il est constaté une bonne cohésion à l'interface entre la matière active et le collecteur de courant.
- Quelques soient les conditions de synthèse, le cœur de Nickel métal zéro est toujours présent.

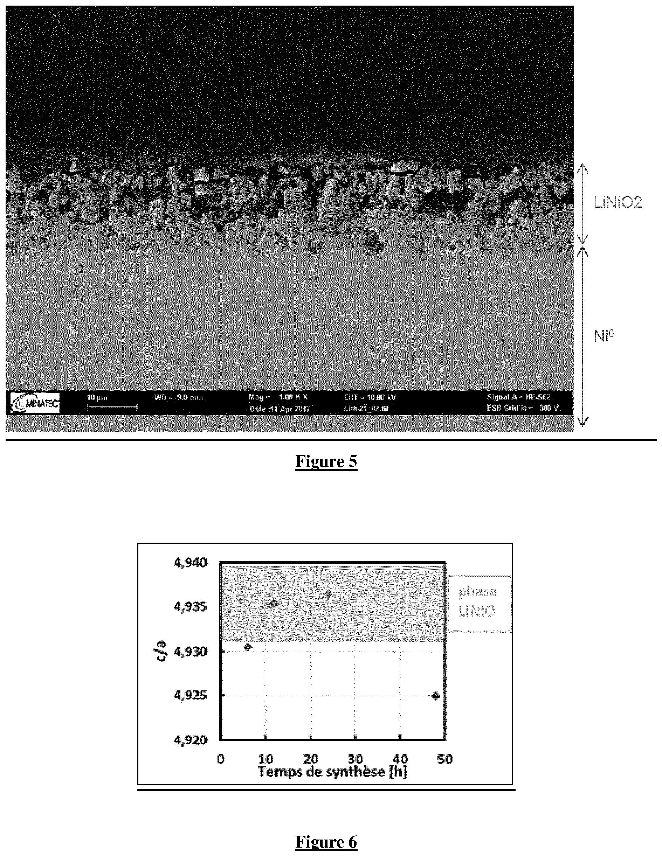

L'observation d'une coupe des électrodes ainsi synthétisées au microscope électronique à balayage a en outre permis de déterminer l'épaisseur de la couche lithiée formée. La figure 5 est un exemple d'une telle coupe observée au microscope électronique à balayage. Cette épaisseur varie entre 8 µm et 15 µm.

### Exemple 4

Le procédé de l'exemple 3 a été reproduit avec des plaques de Nickel métal lavées et mélangées au sein d'un creuset à du LiOH, l'ensemble étant exposé à une température à 650°C entre 6h et 48h.

La figure 6 montre l'évolution du rapport entre les paramètres de maille c et a du revêtement formé sur les plaques de nickel. Le rapport est déterminé à partir de diffractogrammes réalisés au cours du traitement thermique. L'évolution du rapport c/a permet de caractériser le taux de lithiation du matériau formé. En particulier, la figure 6 montre que la phase LiNiO₂ la plus pure en surface est obtenue lorsque le traitement thermique dure entre 12h et 24h.

### Exemple 5 :

### Batterie contenant une électrode selon l'invention

La cyclabilité de l'électrode synthétisée à 650°C pendant 12h en exemple 3 a été testée en Pouch cell.

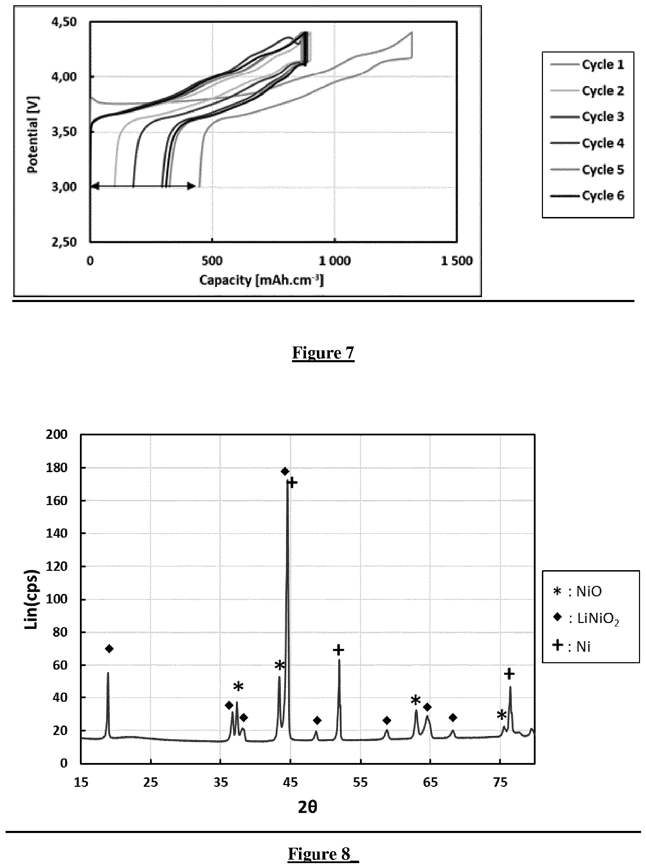

L'électrode a été montée face à une électrode de lithium déposée sur une grille de cuivre. 2 séparateurs, un Celgard 2305 et un wattman, ont été placés entre les électrodes. Le tout a été imprégné par un électrolyte LP10. La figure 7 présente les courbes de cyclage de l'accumulateur.

Il est ainsi constaté que cette électrode peut insérer et désinsérer efficacement des ions lithium de manière réversible. La capacité obtenue lors de la première charge est proche de la capacité théorique du matériau.

Il est également noté au cours de la première décharge, le fait que le matériau subit une forte capacité irréversible. Toutefois ce phénomène est usuel pour ce type de matériaux. Il est attribué à la formation de domaines inactifs (électriquement isolés) dans la structure de la cathode.

### Exemple 6 :

### Synthèse d'une électrode poreuse

Une mousse de nickel, possédant une densité de 0,45 g/cm² et une porosité de 95% a été lithiée avec du LiOH, à 650°C pendant 24h. Le diffractogramme de la figure 8 révèle bien la présence de LiNiO₂ dans la mousse, ainsi que celle de Nickel métal.

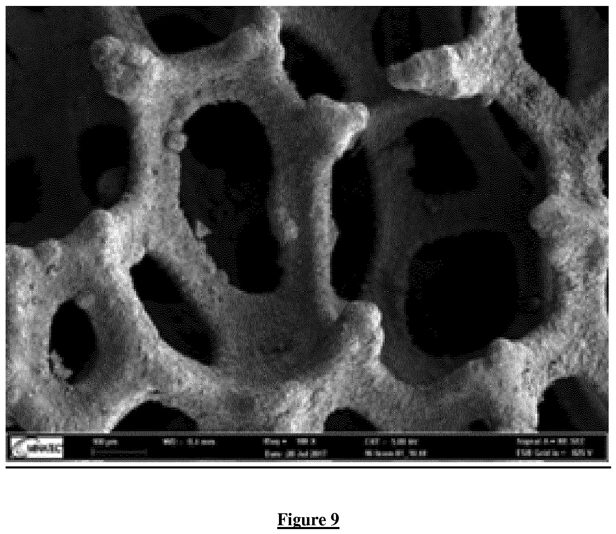

L'image MEB en figure 9 montre bien que la formation de LiNiO₂ est uniforme dans toute la porosité de la mousse.

## Revendications

1. Procédé de préparation d'une électrode comprenant au moins les étapes consistant à :
a) Disposer du matériau support constitutif de l'électrode, dit matériau (1), ledit matériau étant apte à former un collecteur de courant et étant constitué, au moins en surface, d'au moins un métal de transition de degré d'oxydation zéro et/ou d'un oxyde de métal de transition,
b) Mettre en contact direct, dans un réacteur, tout ou partie dudit matériau (1) avec au moins une source de lithium (2), ledit contact étant réalisé à une température au moins égale à la température de fusion de ladite source en lithium (2), et dans des conditions propices à la formation d'un dépôt d'au moins un oxyde métallique de transition lithié, à titre de matériau actif, à l'interface dudit matériau (1) et de ladite source de lithium,
**caractérisé en ce que** le métal de degré d'oxydation zéro et/ou l'oxyde métallique présent au contact dudit matériau (1) et de ladite source de lithium constitue la source en métal de transition dédié à interagir thermiquement avec le lithium pour former ledit matériau actif,
ledit procédé étant réalisé en sel fondu.

2. Procédé selon la revendication 1 dans lequel ledit réacteur est un creuset.

3. Procédé selon l'une quelconque des revendications précédentes dans lequel ledit réacteur contient uniquement tout ou partie du matériau collecteur (1) et ladite source en lithium (2).

4. Procédé selon l'une quelconque des revendications précédentes dans lequel le composant métallique en surface dudit matériau collecteur (1) est choisi parmi le nickel, cobalt, manganèse, titane, fer, vanadium et leurs oxydes respectifs.

5. Procédé selon l'une quelconque des revendications précédentes dans lequel ladite source de lithium comprend au moins un sel de lithium en particulier choisi parmi LiOH, Li₂CO₃, LiNO₃ LiNO₂, Li₂SO₄, LiF, LiCl, LiBr, LiI, LiHCO₃, C₂H₃LiO₂, Li₂O₂ et leurs mélanges.

6. Procédé selon l'une quelconque des revendications précédentes dans lequel la température en b) est supérieure ou égale à 550 °C, en particulier varie de 550 à 950°C et de préférence varie de 600°C à 925°C.

7. Procédé selon l'une quelconque des revendications précédentes mettant en œuvre en étape a) un matériau métallique (1) constitué au moins en surface d'un métal de transition de degré d'oxydation zéro et comprenant préalablement à l'étape b) une étape d'oxydation thermique dudit métal de degré d'oxydation zéro.

8. Procédé selon l'une quelconque des revendications 1 à 6 dans lequel ledit matériau (1) en l'étape b) est un matériau revêtu d'un matériau actif obtenu selon l'une quelconque des revendications 1 à 7.

9. Procédé selon la revendication précédente dans lequel la source de lithium considérée en étape b) est identique ou différente et de préférence différente, de celle considérée pour la réalisation préalable du matériau actif dudit matériau (1).

10. Procédé selon l'une quelconque des revendications précédentes dans lequel l'épaisseur du film d'oxyde métallique de transition lithié formé est inférieure à 75µm, en particulier inférieure à 30 µm et de préférence varie de 8 à 15 µm.

11. Procédé selon l'une quelconque des revendications précédentes dans lequel le collecteur se présente sous la forme d'un feuillard, d'un tube, d'une plaque ou d'une surface micro- ou nano- structurée.

12. Electrode obtenue par le procédé selon l'une des revendications 1 à 11 et utile pour batterie de lithium, **caractérisée en ce qu'**elle est constituée d'un collecteur de courant et d'un film de matériau actif, ledit film étant en contact direct et intime avec ledit collecteur et étant constitué d'oxyde(s) métallique(s) de transition lithié(s).

13. Electrode selon la revendication précédente dont le film de matériau actif est non poreux.

14. Electrode selon la revendication 12 ou 13 dont ledit film de matériau actif possède une épaisseur inférieure à 75 µm, de préférence inférieure à 30 µm et plus préférentiellement variant de 8 µm à 15 µm.

15. Electrode selon l'une quelconque des revendications 12 à 14 dont ledit film de matériau actif est formé d'au moins un et de préférence d'un unique matériau choisi parmi LiMnO₂, Li₂MnO₃ et LiNiO₂.

16. Electrode selon l'une quelconque des revendications 12 à 15 dont le collecteur se présente sous la forme d'un feuillard, d'un tube, d'une plaque ou d'une surface micro ou nano structurée.

17. Utilisation d'une électrode selon l'une quelconque des revendications 12 à 16 ou obtenue selon l'une quelconque des revendications 1 à 11, dans une batterie au lithium, un condensateur, un dispositif de filtration actif, un système de conversion d'électricité en gaz, un dispositif d'électrolyse et une batterie redox-flow et de préférence une batterie au lithium.

18. Batterie de lithium comprenant au moins une électrode selon l'une quelconque des revendications 12 à 16 ou obtenue selon l'une quelconque des revendications 1 à 11.

## Patentansprüche

1. Verfahren zur Herstellung einer Elektrode, umfassend mindestens die folgenden Schritte:
a) Bereitstellen des Trägermaterials, aus dem die Elektrode besteht, Material (1) genannt, wobei das Material geeignet ist, einen Stromkollektor zu bilden und, zumindest an der Oberfläche, aus mindestens einem Übergangsmetall mit der Oxidationsstufe null und/oder einem Übergangsmetalloxid besteht,
b) direktes Inkontaktbringen, in einem Reaktor, des gesamten oder eines Teils des Materials (1) mit mindestens einer Lithiumquelle (2), wobei der Kontakt bei einer Temperatur ausgeführt wird, die mindestens gleich der Schmelztemperatur der Lithiumquelle (2) ist, und unter zur Bildung eines Niederschlags mindestens eines Lithiumübergangsmetalloxids als aktives Material an der Grenzfläche des Materials (1) und der Lithiumquelle geeigneten Bedingungen,
**dadurch gekennzeichnet, dass** das Metall mit der Oxidationsstufe null und/oder das Metalloxid, das beim Kontakt des Materials (1) und der Lithiumquelle vorliegt, die Quelle des Übergangsmaterials bildet, das dazu bestimmt ist, mit dem Lithium thermisch wechselzuwirken, um das aktive Material zu bilden,
wobei das Verfahren in Salzschmelze ausgeführt wird.

2. Verfahren nach Anspruch 1, bei dem der Reaktor ein Tiegel ist.

3. Verfahren nach einem der vorhergehenden Ansprüche, bei dem der Reaktor einzig das gesamte oder einen Teil des Kollektormaterials (1) und die Lithiumquelle (2) enthält.

4. Verfahren nach einem der vorhergehenden Ansprüche, bei dem die Metallkomponente an der Oberfläche des Kollektormaterials (1) unter Nickel, Kobalt, Mangan, Titan, Eisen, Vanadium und ihren jeweiligen Oxiden gewählt ist.

5. Verfahren nach einem der vorhergehenden Ansprüche, bei dem die Lithiumquelle mindestens ein insbesondere unter LiOH, Li₂CO₃, LiNO₃ LiNO₂, Li₂SO₄, LiF, LiCl, LiBr, LiI, LiHCO₃, C₂H₃LiO₂, Li₂O₂ und ihren Mischungen gewähltes Lithiumsalz umfasst.

6. Verfahren nach einem der vorhergehenden Ansprüche, bei dem die Temperatur in b) 550 °C oder mehr beträgt, insbesondere zwischen 550 und 950 °C und bevorzugt zwischen 600 °C und 925 °C liegt.

7. Verfahren nach einem der vorhergehenden Ansprüche, das in Schritt a) ein metallenes Material (1) einsetzt, das zumindest an der Oberfläche aus einem Übergangsmetall mit der Oxidationsstufe null besteht, und vor dem Schritt b) einen Schritt zur Thermooxidation des Metalls mit der Oxidationsstufe null umfasst.

8. Verfahren nach einem der Ansprüche 1 bis 6, bei dem das Material (1) in Schritt b) ein Material ist, das mit einem nach einem der Ansprüche 1 bis 7 erhaltenen aktiven Material überzogen ist.

9. Verfahren nach dem vorhergehenden Anspruch, bei dem die in Schritt b) betrachtete Lithiumquelle identisch mit oder verschieden von und bevorzugt verschieden von der zur vorherigen Ausführung des aktiven Materials des Materials (1) betrachteten ist.

10. Verfahren nach einem der vorhergehenden Ansprüche, bei dem die Dicke des gebildeten Films aus Lithiumübergangsmetalloxid weniger als 75 µm, insbesondere weniger als 30 µm und bevorzugt zwischen 8 und 15 µm beträgt.

11. Verfahren nach einem der vorhergehenden Ansprüche, bei dem der Kollektor in Form eines Bands, eines Rohrs, einer Platte oder einer mikro- oder nanostrukturierten Oberfläche vorliegt.

12. Elektrode, die mit dem Verfahren nach einem der Ansprüche 1 bis 11 erhalten wurde und für eine Lithiumbatterie nützlich ist, **dadurch gekennzeichnet, dass** sie aus einem Stromkollektor und einem Film aus aktivem Material besteht, wobei der Film in direktem und engem Kontakt mit dem Kollektor steht und aus Lithiumübergangsmetalloxid(en) besteht.

13. Elektrode nach dem vorhergehenden Anspruch, deren Film aus aktivem Material nicht porös ist.

14. Elektrode nach Anspruch 12 oder 13, deren Film aus aktivem Material eine Dicke von weniger als 75 µm, bevorzugt weniger als 30 µm und weiter bevorzugt zwischen 8 µm und 15 µm besitzt.

15. Elektrode nach einem der Ansprüche 12 bis 14, deren Film aus aktivem Material aus mindestens einem und bevorzugt aus einem einzigen unter LiMnO₂, Li₂MnO₃ und LiNiO₂ gewählten Material gebildet ist.

16. Elektrode nach einem der Ansprüche 12 bis 15, deren Kollektor in Form eines Bands, eines Rohrs, einer Platte oder einer mikro- oder nanostrukturierten Oberfläche vorliegt.

17. Verwendung einer Elektrode nach einem der Ansprüche 12 bis 16 oder einer nach einem der Ansprüche 1 bis 11 erhaltenen Elektrode in einer Lithiumbatterie, einem Kondensator, einer aktiven Filtervorrichtung, einem Power-to-Gas-System, einer Elektrolysevorrichtung und einer Redox-Flow-Batterie und bevorzugt einer Lithiumbatterie.

18. Lithiumbatterie, umfassend mindestens eine Elektrode nach einem der Ansprüche 12 bis 16 oder eine nach einem der Ansprüche 1 bis 11 erhaltene Elektrode.

## Claims

1. Method for producing an electrode, comprising at least the steps of:
a) providing constituent support material of the electrode, termed material (1), said material being capable of forming a current collector and consisting, at least on the surface, of at least one transition metal in zero oxidation state and/or of a transition metal oxide,
b) contacting some or all of said material (1) directly, in a reactor, with at least one lithium source (2), said contacting being carried out at a temperature at least equal to the melting temperature of said lithium source (2), and under conditions favouring the formation of a coating of at least one lithiated transition metal oxide, as active material, at the interface between said material (1) and said lithium source,
**characterized in that** the metal in zero oxidation state and/or the metal oxide present in contact with said material (1) and with said lithium source form/forms the source of transition metal intended for thermal interaction with the lithium to form said active material,
said method being carried out in molten salt.

2. Method according to Claim 1, wherein said reactor is a crucible.

3. Method according to either of the preceding claims, wherein said reactor contains only some or all of the collector material (1) and said lithium source (2).

4. Method according to any one of the preceding claims, wherein the metal component at the surface of said collector material (1) is selected from nickel, cobalt, manganese, titanium, iron, vanadium and their respective oxides.

5. Method according to any one of the preceding claims, wherein said lithium source comprises at least one lithium salt in particular selected from LiOH, Li₂CO₃, LiNO₃, LiNO₂, Li₂SO₄, LiF, LiCl, LiBr, LiI, LiHCO₃, C₂H₃LiO₂, Li₂O₂ and mixtures thereof.

6. Method according to any one of the preceding claims, wherein the temperature in b) is greater than or equal to 550°C, in particular from 550 to 950°C and preferably from 600°C to 925°C.

7. Method according to any one of the preceding claims, employing in step a) a metallic material (1) consisting at least on the surface of a transition metal in zero oxidation state, and comprising prior to step b) a step of thermal oxidation of said metal in zero oxidation state.

8. Method according to any one of Claims 1 to 6, wherein said material (1) in step b) is a material coated with an active material obtained according to any one of Claims 1 to 7.

9. Method according to the preceding claim, wherein the lithium source in question in step b) is identical to or different from, and preferably different from, the source in question for the prior realization of the active material of said material (1).

10. Method according to any one of the preceding claims, wherein the thickness of the lithiated transition metal oxide film formed is less than 75 µm, in particular less than 30 µm and preferably from 8 to 15 µm.

11. Method according to any one of the preceding claims, wherein the collector is in the form of a strip, a tube, a plate or a micro- or nano-structured surface.

12. Electrode obtained by the method according to any of Claims 1 to 11 and useful for a lithium battery, **characterized in that** it consists of a current collector and a film of active material, said film being in direct and intimate contact with said collector and consisting of lithiated transition metal oxide(s).

13. Electrode according to the preceding claim, in which the film of active material is non-porous.

14. Electrode according to Claim 12 or 13, in which said film of active material possesses a thickness of less than 75 µm, preferably less than 30 µm and more preferably from 8 µm to 15 µm.

15. Electrode according to any one of Claims 12 to 14, in which said film of active material is formed of at least one and preferably of a single material selected from LiMnO₂, Li₂MnO₃ and LiNiO₂.

16. Electrode according to any one of Claims 12 to 15, in which the collector is in the form of a strip, a tube, a plate or a micro- or nano-structured surface.

17. Use of an electrode according to any one of Claims 12 to 16 or obtained according to any one of Claims 1 to 11 in a lithium battery, a capacitor, an active filtration device, a system for converting electricity into gas, an electrolysis device and a redox-flow battery, and preferably a lithium battery.

18. Lithium battery comprising at least one electrode according to any one of Claims 12 to 16 or obtained according to any one of Claims 1 to 11.
